Europäisches Patentamt

European Patent Office

Office européen des brevets

(11) Publication number: **0 593 843 A2**

## EUROPEAN PATENT APPLICATION

(21) Application number: **93104002.6**

(22) Date of filing: **12.03.93**

(51) Int. Cl.⁵: **H04L 12/56**, H04Q 11/04

(30) Priority: **22.10.92 GB 9222204**

(43) Date of publication of application:
**27.04.94 Bulletin 94/17**

(84) Designated Contracting States:
**AT BE CH DE DK ES FR GB GR IE IT LI LU MC NL PT SE**

(71) Applicant: **ROKE MANOR RESEARCH LIMITED**
**Roke Manor**
**Romsey, Hampshire, SO51 0ZN(GB)**

(72) Inventor: **Hayter, Andrew Timothy**
**3 Cobden Gardens,**
**Bitterne park**
**Southampton SO2 4LN(GB)**

(74) Representative: **Allen, Derek**
**Siemens Group Services Limited**
**Intellectual Property Department**
**Roke Manor**
**Old Salisbury Lane**
**Romsey Hampshire SO51 0ZN (GB)**

(54) Improvements in frame relay data transmission systems.

㊸ A frame relay system including an ATM interworking unit via which signals for transmission to, or reception from, a remote frame relay system via an ATM network are routed, the unit comprising means for sending to the remote frame relay system a bandwidth request frame, means for assessing such a request frame in relation to available bandwidth and means for providing an appropriate response.

Fig.1.

This invention relates to frame relay systems for data transmission.

Frame relay transmission systems using existing protocols are perfectly satisfactory when used in systems dedicated exclusively to such protocols. With future transmission requirements, however, it is envisaged that a plurality of frame relay systems may need to be placed in mutual communication via a broadband network such as an asynchronous transfer mode (ATM) system.

Frame relay traffic is predominantly bursty data traffic although speech traffic may be included. By its nature, bursty traffic requires high bandwidths for part of the time, and little or no bandwidth at other times. In order efficiently to use the bandwidth available it is necessary to allocate the bandwidth using the mean bandwidth requirement of each data transmission source and not the peak bandwidth. If mean bandwidth allocation is used however, total peak bandwidth may at times be greater than the available bandwidth which is a serious problem. The problem is particularly apparent when a number of data transmission sources share the same path. Under these circumstances, if two or more of the transmission sources burst at the same time, they may require greater bandwidth than is instantaneously available in independent disparately distributed sources.

It is an object of the present invention to provide a system in which mutual communication between a plurality of frame relay systems across an ATM network is facilitated without undue degradation of communication efficiency when the available bandwidth is instantaneously inadequate to support required transmission links.

According to the present invention a frame relay system includes an ATM inter-working unit via which signals for transmission to, or reception from, a remote frame relay system via an ATM network are routed, the unit comprising means for sending to the remote frame relay system a bandwidth request frame, means for assessing such a request frame in relation to available bandwidth and means for providing an appropriate response.

The bandwidth request frame may comprise data appertaining to at least four parameters, such parameters being specified as; committed information rate (CIR); committed burst size (Bc), excess burst size (Be) and a time interval over which Bc and Be are measured (dt).

The interworking unit may comprise a management unit including a store for the parameters CIR, Bc and Be, a bandwidth comparator responsive to the store which indicates available bandwidth and responsive also to bandwidth requests for making the appropriate response.

The appropriate response will be determined in dependence upon the said request and the available bandwidth, these being provided for allocating bandwidth and sending an appropriate acknowledgement, or rejecting a request, or changing a request in accordance with the bandwidth available when a request is received.

Frame relay systems operate in accordance with a protocol which specifies an address header of pre-determined size, associated with a data packet of generally indeterminate size, whereas ATM systems operate in accordance with a protocol which specifies a fixed header size associated with a data packet of pre-determined size. The ATM inter-working unit thus comprises an ATM segmentation unit used to convert frame relay packets to corresponding ATM packets for the transmission of data from frame relay to ATM and an ATM re-assembly unit for performing a reverse function to facilitate the transmission of data from ATM to frame relay.

The ATM segmentation unit may be fed from a frame buffer store, the management unit being responsive to the frame buffer store and to the ATM re-assembly unit for, on the one hand received bandwidth request allocation, and on the other hand, bandwidth requests/rejections and acknowledgements.

One embodiment of the invention will now be described by way of example only with reference to the accompanying drawings in which;

Figure 1 is a somewhat schematic diagram showing frame relay networks inter-connected across an ATM network;

Figure 2 is a block schematic diagram of a frame relay to ATM inter-working unit;

Figure 3 is a block schematic diagram of a management unit which forms a part of the inter-working unit shown in Figure 2;

Figure 4 is a state diagram for ATM inter-working units requesting bandwidth for transmission of data.

Figure 5 is a state diagram for ATM inter-working units granting bandwidth to facilitate reception of data, and

Figure 6 is a diagram of Frame Relay Access for congestion avoidance information (FRACA) required for network bandwidth allocation.

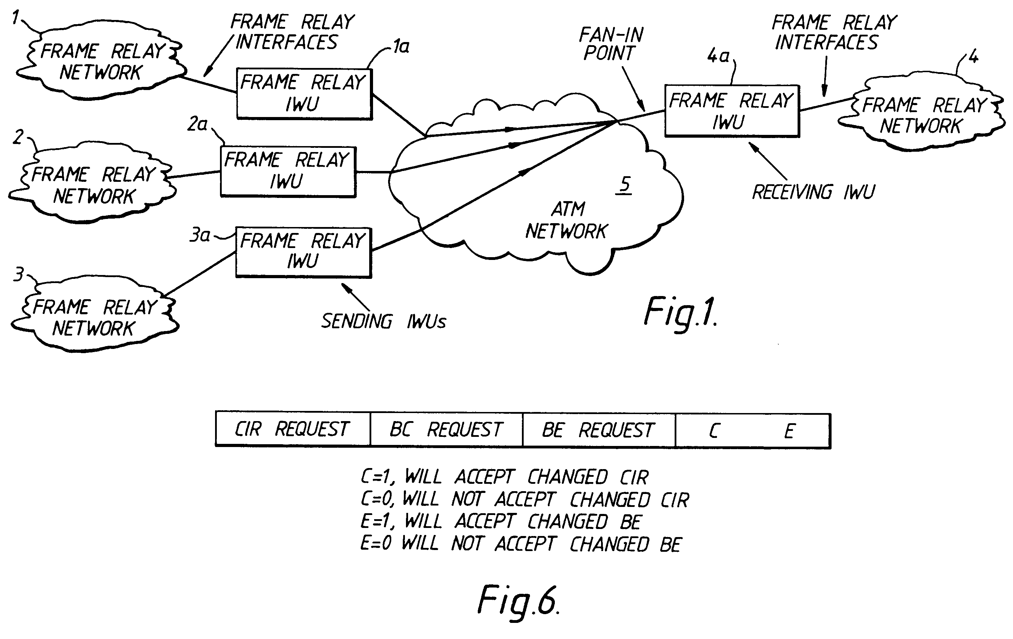

Referring now to Figure 1, a plurality of frame relay networks, 1, 2 and 3 are shown which contemporaneously require mutual communication with a frame relay network 4, mutual communication being provided via an ATM broadband network 5. In order to facilitate communication across the ATM network 5, each frame relay network is provided with a frame relay inter-working unit (IWU) whereby, as shown in Figure 1, the frame relay networks 1, 2, 3 and 4 have operatively associated with them, frame relay interworking units 1a, 2a, 3a and 4a respectively.

Frame relay connections across a broadband ATM network form permanent virtual circuits (PVCs) which are bi-directional and can only be set up by off-line contact with a system controller. The frames are encapsulated within a broadband datagram packet and then segmented. The segments are transmitted across the network. Because it has been encapsulated, the frame relay protocol takes no part in transmission across the broadband network.

Each frame relay interface, both sending and receiving, has a maximum bandwidth of 2 Mbps. To allow sending and receiving across a broadband network between each sending and receiving IWU connection, the connection across the broadband network must also have a maximum bandwidth of 2 Mbps each in order to allow the frame relay connections to work to their full efficiency.

The problem is that if each connection across the broadband network has a bandwidth of 2 Mbps, then the total bandwidth at the fan-in point is (n - 1)* 2Mbps. Therefore if several of the sending IWUs burst at the same time, more data will arrive at the receiving IWU than can be sent out onto the frame relay connection and this is a problem.

In order to overcome this problem, Frame Relay Access for Congestion Avoidance (FRACA) management units are provided in each of the inter-working units 1a, 2a, 3a and 4a which dynamically allocate the available bandwidth at the fan-in point. This form of management only affects the frame relay plane, not the broadband network plane which may independently experience congestion and requires a separate scheme to control it which will not be considered herein.

Once PVCs have been established across the broadband network they support 2 Mbps all the time. By introducing an in-band network management message the IWUs may limit the bandwidth they can use between each other to less than 2 Mbps for a single connection.

The receiving IWU will want to limit the bandwidth that may be received at the fan-in point to 2 Mbps. Therefore initially at PVC establishment the broadband network will allocate 2 Mbps each to the PVCs. The frame relay network will allocate zero or very little bandwidth to each PVC.

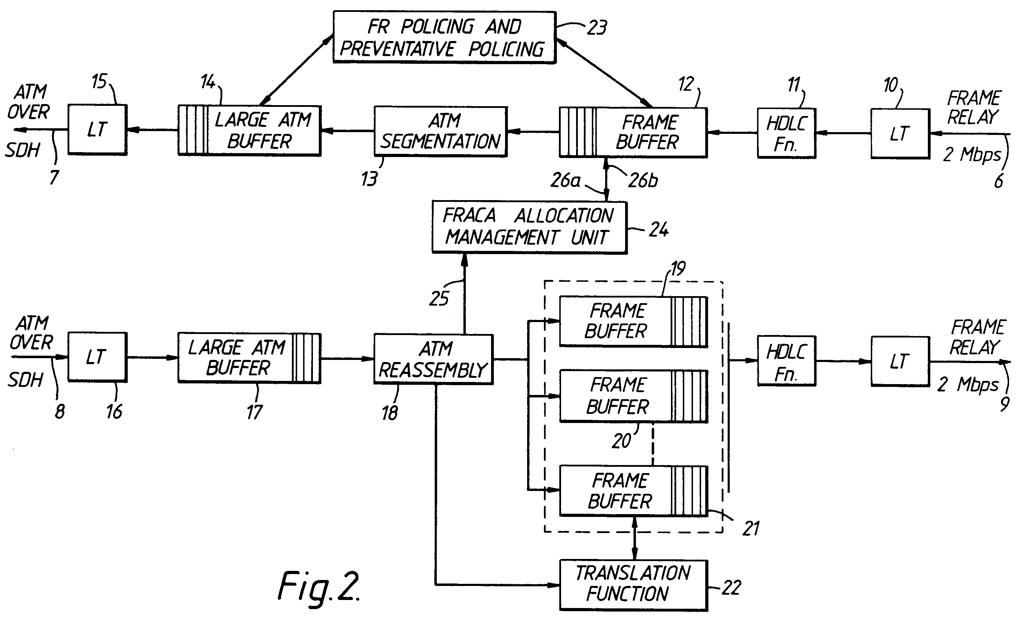

As shown in Figure 2, each of the frame relay inter-working units comprises a path between an input line 6, and an output line 7, for the transmission of data from a frame relay network, to the ATM network and a path from input line 8 to output line 9 for the transmission of data in the opposite direction from the ATM network to a frame relay network.

The path between the lines 6 and 7 comprises a line termination unit 10, and a high-level data-line controller 11, which feed a frame buffer store 12, and perform a line termination and frame-forming function. The frame buffer 12 is arranged to feed an ATM segmentation unit 13, which segments the frame relay data so as to convert it to an ATM form. Data in the ATM form is then stored in a large ATM buffer 14, and transmitted to the output line 7 via a line termination unit 15.

In order to prevent incorrect or excessive numbers of frames being transmitted, a frame relay policing and preventative policing unit 23, is provided which checks the frames in the large ATM buffer 14, and in the frame buffer 12 and if necessary deletes frames if a pre-determined number is exceeded.

Similarly, data on the input line 8 from the ATM network is fed via a line termination unit 16, and a large ATM buffer 17, to an ATM re-assembly unit 18. The ATM re-assembly unit serves to convert data in an ATM format to corresponding frame relay format which data is then transmitted to frame buffers 19, 20 and 21, the frame buffers being fed with appropriate address information from a translation function unit 22, which is responsive to the ATM address data and provides a translation facility, for example from a look-up table.

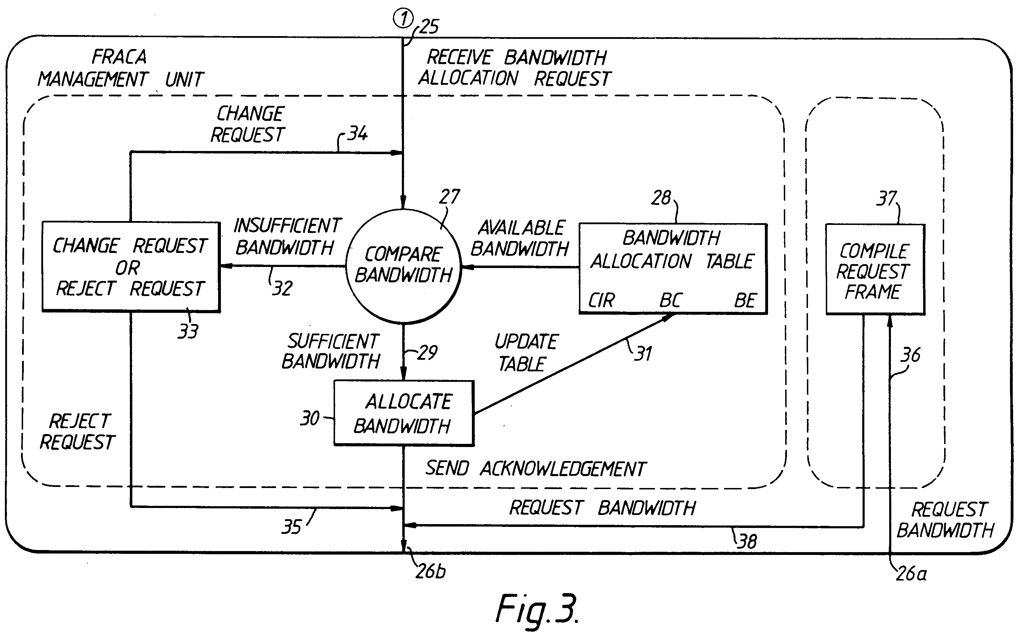

As can be seen from Figure 1, if the frame relay network 4 is contemporaneously accessed by the frame relay networks 1, 2 and 3 the predetermined maximum data handling capacity of the frame relay network 4 can be exceeded. In order to provide for this eventuality each frame relay inter-working unit such as the frame relay inter-working unit 4a, as shown in Figure 2, is provided with a frame relay access for congestion avoidance (FRACA) allocation management unit 24, as shown in Figure 2. The management unit 24, is responsive to the frame buffer 12 and to the ATM re-assembly unit 18 as will hereinafter be explained with reference to Figure 3, for the allocation of bandwidth to facilitate reception and for the generation of bandwidth requests to facilitate transmission.

In Figure 2, lines 25 and 26a and 26b are shown which couple the FRACA allocation unit 24 to the ATM re-assembly unit 18 and the frame buffer 12 respectively. These lines 25, 26a and 26b are shown also in Figure 3. Thus receive bandwidth allocation request frames are fed via the line 25 to a bandwidth comparator 27, which compares the available bandwidth as indicated by data stored in a bandwidth allocation table 28, which includes data appertaining to the parameters CIR, Bc and Be, with the bandwidth required. If there is sufficient available bandwidth an appropriate signal is sent via line 29 to a bandwidth allocator 30, which sends an acknowledgement on the line 26b to confirm that the bandwidth is available and also sends a signal via a line 31 to the bandwidth allocation table 28 to update the data therein so that it correctly reflects the new available bandwidth. If there is insufficient bandwidth, a signal is sent via line 32 to a change request or reject request unit 33, which either requests a change of requirement via a line 34 or rejects the bandwidth request by sending an appropriate signal via the line 35. If bandwidth is required to facilitate transmission then a request bandwidth signal is sent via a line 36 to a request frame compilation unit 37, which generates a request frame which is transmitted via a line 38. Thus it can be seen that send acknowledgement signals, bandwidth request signals and bandwidth request rejection signals are all fed via the line 26b to the frame buffer 12, while bandwidth requests are sent from the frame buffer 12 to the FRACA allocation management unit 12 via the line 26a. The line 25 serves only for receive bandwidth allocation requests.

A more detailed explanation of the mode of operation will now be given wherein general references to the Figures 2, 3, 4 and 5 are made.

The quality of service a user expects is controlled by the four parameters:-

Committed Information Rate (CIR) which is the mean data transfer rate measured in bits/sec and is guaranteed.

Committed Burst size (Bc) which is the guaranteed maximum amount of data that may be transferred in time dt, where CIR = Bc/dt.

Excess Burst size (Be) which is the maximum amount of additional data that may be transmitted over time dt, and which is not guaranteed and may be deleted at times of congestion.

Time dt is the time interval over which Bc and Be are measured.

When an IWU has a data burst it wants to send, it first sends a bandwidth request frame to the receiving IWU which contains the four parameters CIR, Bc, Be, dt. These standard parameters are defined in ANSI T1.607. The receiving IWU checks the amount of CIR bandwidth it has already allocated and if the amount requested does not exceed 2 Mbps, it allocates the CIR. If Be is also requested the IWU may accept the request although the total bandwidth requested between CIR and Be is over 2 Mbps. This is because data sent under the Be parameter is not guaranteed to be passed across the network. It may be deleted if the network is congested.

The parameters are usually only changed for a specific PVC at call establishment, however the bandwidth request may now use different values of the parameters for each request.

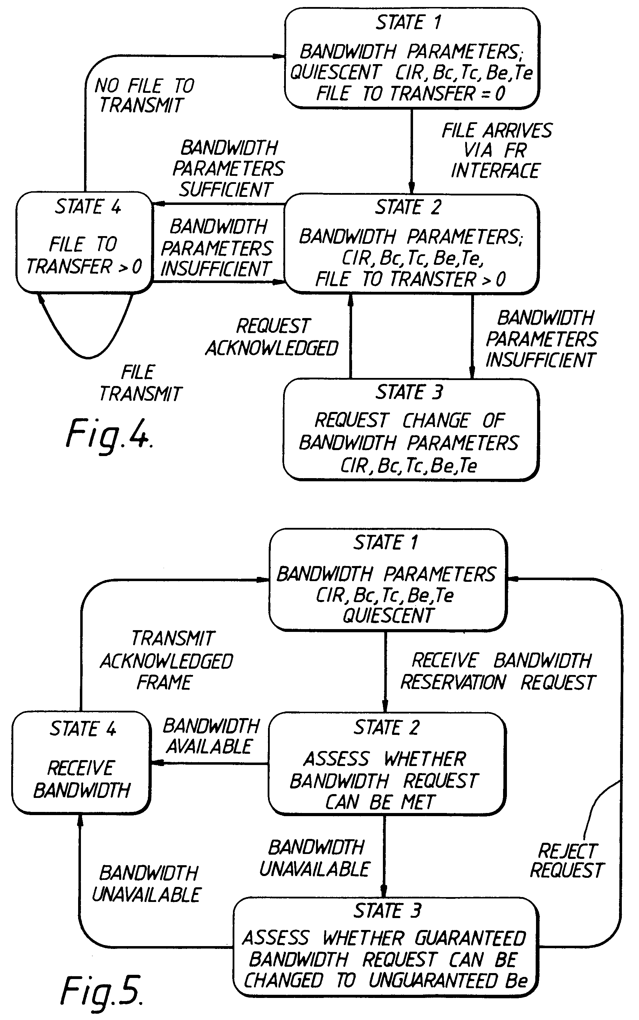

If the amount of guaranteed bandwidth requested cannot be met, the protocol may offer unguaranteed bandwidth in place of some or all of the guaranteed bandwidth requested, as shown in State 3 of figure 5. This provides a best effort service which may be sufficient for some applications. Alternatively, a user may accept the best offer and attempt by repeated requests to increase the guaranteed component of the allocated bandwidth and reduce the unguaranteed component of the bandwidth.

The time taken to send a bandwidth request and receive a reply is called the round trip delay. A data burst which may take 10 ms to send across the broadband network may take 50 ms in round trip delay to set up. Therefore bandwidth may be reserved but unused. The unused bandwidth may be used by the Be parameter so improving the utilisation of bandwidth and hence the allocation method.

The bandwidth may be set up across the broadband network by using a broadband packet to transmit the information, however as the bandwidth reservation is taking place for the benefit of the frame relay network efficiency, a frame relay network message format should be used as the requesting mechanism. A method of network signalling for frame relay across broadband networks has not yet been proposed to the standards bodies and so a definitive requesting mechanism is not yet available.. However it is most likely that the Local Management Interface (LMI) will be adapted for network signalling use. Accordingly, a new report type will be required and the information required is as shown in Figure 6.

The fields that are required are:-
1. Requested value for CIR.
2. Requested value for Bc.
3. Requested value for Be.
4. Changed limit of CIR acceptable. (zero indicates no alternative acceptable).
5. Changed limit of Be acceptable. (zero indicated no alternative acceptable).

A zero in either the C or E positions (see Figure 6) indicates that the requesting user will not accept changes to the request and therefore the request is either accepted or rejected.

A frame relay system having a dynamic bandwidth allocation scheme, as hereinbefore described, has the following advantages;

It removes the possibility of being unable to guarantee bandwidth to a number of connections;

It avoids congestion caused by the fan-in of a number of connections;

It allows unused but reserved bandwidth to be used by unguaranteed data transfer, and

It increases the utilisation of each inter-frame relay broadband connection.

Various modifications may be made to the specific system hereinbefore described without departing from the scope of the invention as will be appreciated by the cogniscenti and for example the fields recommended in Figure 6 may be modified or supplimented.

**Claims**

1.  A frame relay system including an ATM inter-working unit via which signals for transmission to, or reception from, a remote frame relay system via an ATM network are routed, the unit comprising means for sending to the remote frame relay system a bandwidth request frame, means for assessing such a request frame in relation to available bandwidth and means for providing an appropriate response.

2.  A system as claimed in claim 1 wherein the bandwidth request frame comprises data appertaining to at least four parameters, such parameters being specified as; committed information rate (CIR); committed burst size (Bc), excess burst size (Be) and a time interval over which Bc and Be are measured (dt).

3.  A system as claimed in claim 2 wherein the interworking unit comprises a management unit including a store for the parameters CIR, Bc and Be, a bandwidth comparator responsive to the store which indicates available bandwidth and responsive also to bandwidth requests for making the appropriate response.

4.  A system as claimed in any preceding claim wherein the ATM inter-working unit comprises an ATM segmentation unit used to convert frame relay packets to corresponding ATM packets for the transmission of data from frame relay to ATM and an ATM reassembly unit for performing a reverse function to facilitate the transmission of data from ATM to frame relay.

5.  A system as claimed in claim 4 wherein the ATM segmentation unit is fed from a frame buffer store, the management unit being responsive to the frame buffer store and to the ATM re-assembly unit for, on the one hand received bandwidth request allocation, and on the other hand, bandwidth requests/rejections and acknowledgements.

FRAME RELAY
INTERFACES

FRAME RELAY
NETWORK

*1*

*1a*

FRAME RELAY
IWU

FAN-IN
POINT

*4a*

FRAME RELAY
INTERFACES

FRAME RELAY
IWU

FRAME RELAY
NETWORK

*4*

*2a*

FRAME RELAY
NETWORK

*2*

FRAME RELAY
IWU

RECEIVING IWU

*5*

ATM
NETWORK

*3a*

FRAME RELAY
IWU

FRAME RELAY
NETWORK

*3*

SENDING IWUs

Fig.1.

| CIR REQUEST | BC REQUEST | BE REQUEST | C | E |
|---|---|---|---|---|

C=1, WILL ACCEPT CHANGED CIR
C=0, WILL NOT ACCEPT CHANGED CIR
E=1, WILL ACCEPT CHANGED BE
E=0 WILL NOT ACCEPT CHANGED BE

Fig.6.

EP 0 593 843 A2

Fig.2.

EP 0 593 843 A2

Fig.3.

EP 0 593 843 A2

STATE 1

BANDWIDTH PARAMETERS;
QUIESCENT CIR,Bc,Tc,Be,Te
FILE TO TRANSFER = 0

NO FILE TO
TRANSMIT

FILE ARRIVES
VIA FR
INTERFACE

BANDWIDTH
PARAMETERS
SUFFICIENT

STATE 4

FILE TO
TRANSFER > 0

BANDWIDTH
PARAMETERS
INSUFFICIENT

STATE 2

BANDWIDTH PARAMETERS;
CIR,Bc,Tc,Be,Te,
FILE TO TRANSFER > 0

BANDWIDTH
PARAMETERS
INSUFFICIENT

REQUEST
ACKNOWLEDGED

FILE
TRANSMIT

STATE 3

REQUEST CHANGE OF
BANDWIDTH PARAMETERS
CIR,Bc,Tc,Be,Te

## Fig.4.

STATE 1

BANDWIDTH PARAMETERS
CIR,Bc,Tc,Be,Te
QUIESCENT

TRANSMIT
ACKNOWLEDGED
FRAME

RECEIVE BANDWIDTH
RESERVATION REQUEST

STATE 4

RECEIVE
BANDWIDTH

BANDWIDTH
AVAILABLE

STATE 2

ASSESS WHETHER
BANDWIDTH REQUEST
CAN BE MET

REJECT
REQUEST

BANDWIDTH
UNAVAILABLE

BANDWIDTH
UNAVAILABLE

STATE 3

ASSESS WHETHER GUARANTEED
BANDWIDTH REQUEST CAN BE
CHANGED TO UNGUARANTEED Be

## Fig.5.